# EUROPÄISCHE PATENTSCHRIFT

(11) **EP 3 180 840 B1**
(45) Veröffentlichungstag und Bekanntmachung des Hinweises auf die Patenterteilung: **04.11.2020**
(21) Anmeldenummer: 15726621.4
(22) Anmeldetag: 05.06.2015
(51) Int. Cl.: H02K 7/075, B24B 23/04, H02K 7/14, H02K 15/16

(54) **ELEKTROWERKZEUG UND VERFAHREN ZUM MONTIEREN EINES SOLCHEN**
ELECTRIC TOOL AND A METHOD FOR ASSEMBLING SAME
OUTIL ÉLECTRIQUE ET PROCÉDÉ DE MONTAGE D'UN TEL OUTIL ÉLECTRIQUE

(30) Priorität: 11.08.2014 DE 102014111432
(43) Veröffentlichungstag der Anmeldung: 21.06.2017
(73) Patentinhaber: C. & E. Fein GmbH, 73529 Schwäbisch Gmünd-Bargau (DE)
(72) Erfinder: HEILIG, Mark, 71364 Winnenden (DE); HINZ, Andreas, 73557 Mutlangen (DE)
(74) Vertreter: Roos, Michael
(86) Internationale Anmeldenummer: PCT/EP2015/062543
(87) Internationale Veröffentlichungsnummer: WO 2016/023655

(56) Entgegenhaltungen:
- EP-A1- 1 428 625
- US-A- 4 956 910
- US-A- 5 500 993
- US-A- 5 867 892
- US-A1- 2006 290 230

## Beschreibung

Die Erfindung betrifft ein Elektrowerkzeug mit einem Elektromotor mit einer Ankerwelle, an der ein Exzenter zum Antrieb eines Oszillationsantriebs aufgenommen ist, und mit einem an der Ankerwelle aufgenommenen Ankerblechpaket, das eine Mehrzahl von Zähnen aufweist, die jeweils durch Nuten voneinander getrennt sind.

Elektrowerkzeuge werden in der Regel von Universalmotoren angetrieben, bei denen der Anker ein Ankerblechpaket aufweist, das unmittelbar mit der Ankerwelle verbunden ist und worauf eine Mehrzahl von Polen angeordnet ist, die auf benachbarten Zähnen des Ankerblechpakets mit Wicklungen ausgebildet sind. Weist ein solches Elektrowerkzeug einen Oszillationsantrieb auf, so umfasst dieser in der Regel einen Exzenter, der unmittelbar an der Ankerwelle aufgenommen ist, um den Oszillationsantrieb anzutreiben. Bei dem Oszillationsantrieb kann es sich etwa um einen Antrieb für eine Stichsäge, eine Säbelsäge, einen Exzenterschleifer oder aber auch um einen Antrieb mit einer drehoszillierenden Antriebsbewegung um eine feste Achse handeln.

Ist der Exzenter unmittelbar an der Ankerwelle ausgebildet, so führen die auf den Exzenter einwirkenden Kräfte zu Biegebeanspruchungen der Ankerwelle. Dies kann zu Vibrationen, erhöhter Lagerbelastung und ggf. zu Schäden an der Ankerwelle führen.

Aus der US 5 867 892 A ist ein Verfahren zum Montieren eines Elektromotors, der eine Ankerwelle mit einem Ankerblechpaket aufweist, das eine Mehrzahl von Zähnen aufweist, die jeweils durch Nuten voneinander getrennt sind, wobei an der Ankerwelle ein Exzenter zum Antrieb eines Oszillationsantriebs aufgenommen ist, bekannt, wobei das Verfahren die folgenden Schritte aufweist:
- winkelmäßiges Ausrichten der Ankerwelle in Bezug auf das Ankerblechpaket und
- Verbinden der Ankerwelle mit dem Ankerblechpaket in der ausgerichteten Position.

Die Stabilität und die Steifigkeit des Antriebs sind auch hierbei verbessungswürdig.

Aus der EP 1 428 625 A1 ist ein Elektrowerkzeug mit einem Elektromotor gemäß dem Oberbegriff von Anspruch 8 bekannt, mit einer Ankerwelle, an der ein Exzenter zum Antrieb eines Oszillationsantriebs aufgenommen ist, und mit einem an der Ankerwelle aufgenommenen Ankerblechpaket, das eine Mehrzahl von Zähnen aufweist, die jeweils durch Nuten voneinander getrennt sind,

Auch hierbei sind die Stabilität und die Steifigkeit des Antriebs verbessungswürdig.

Ferner sei auf die US 5 500 993 A hingewiesen, aus der ein Verfahren zum Herstellen von Ankerwellen bekannt ist, bei dem eine Ankerwelle mit einem Exzenter in einer bestimmten Weise winkelmäßig ausgerichtet und dann verbunden wird.

Vor diesem Hintergrund liegt der Erfindung die Aufgabe zugrunde, ein verbessertes Elektrowerkzeug gemäß der eingangs genannten Art zu offenbaren, bei dem die Ankerwelle eine möglichst hohe Stabilität, insbesondere eine hohe Steifigkeit im Betrieb aufweist. Ferner soll ein geeignetes Verfahren zum Montieren eines derartigen Elektrowerkzeugs angegeben werden.

Diese Aufgabe wird durch ein Elektrowerkzeug mit einem Elektromotor mit einer Ankerwelle, an der ein Exzenter zum Antrieb eines Oszillationsantriebs aufgenommen ist, und mit einem an der Ankerwelle aufgenommenen Ankerblechpaket gelöst, das eine Mehrzahl von Zähnen aufweist, die jeweils durch Nuten voneinander getrennt sind, wobei der Exzenter mit der Ankerwelle derart winkelmäßig ausgerichtet ist, dass eine Gerade, die eine Mittelachse des Exzenters mit einer Mittelachse der Ankerwelle verbindet, durch eine Mittelachse eines Zahns des Ankerblechpakets verläuft.

Die Aufgabe der Erfindung wird auf diese Weise gelöst. Die Erfindung ist ein Verfahren gemäß dem unabhängigen Anspruch 1 und ein Elektrowerkzeug gemäß dem unabhängigen Anspruch 8. Vorteilhafte Ausführungsformen der Erfindung sind Gegenstand der abhängigen Ansprüche 2 - 7 und 9.

Gemäß der Erfindung wird die hohe Biegesteifigkeit der Zähne des Ankerblechpakets vorteilhaft ausgenutzt, indem das Ankerblechpaket mit einem Zahn ausgerichtet wird, sodass in der Hauptbeanspruchungsrichtung des Exzenters eine erhöhte Steifigkeit vorhanden ist. Somit wird durch eine spezielle Ausrichtung des Ankerblechpakets in Bezug auf die Ankerwelle eine erhöhte Stabilität der Ankerwelle gewährleistet.

Gemäß einer weiteren Ausgestaltung der Erfindung sind an der Ankerwelle und am Ankerblechpaket mechanische Codierungen vorgesehen, durch die die Ausrichtung der Ankerwelle zum Ankerblechpaket festgelegt ist.

Somit ist eine korrekte Montage in der besten Position gewährleistet.

Die Aufgabe der Erfindung wird ferner durch ein Verfahren zum Montieren eines Elektrowerkzeugs mit einem Elektromotor gelöst, der eine Ankerwelle mit einem Ankerblechpaket aufweist, das eine Mehrzahl von Zähnen aufweist, die jeweils durch Nuten voneinander getrennt sind, wobei an der Ankerwelle ein Exzenter zum Antrieb eines Oszillationsantriebs aufgenommen ist, und das die folgenden Schritte aufweist:
- Winkelmäßiges Ausrichten der Ankerwelle in Bezug auf das Ankerblechpaket derart, dass eine Gerade, die eine Mittelachse des Exzenters mit einer Mittelachse der Ankerwelle verbindet, durch eine Mittelachse eines Zahns des Ankerblechpakets verläuft und
- Verbinden der Ankerwelle mit dem Ankerblechpaket in der ausgerichteten Position.

Auch auf diese Weise wird die Aufgabe der Erfindung gelöst. Durch eine derartige Montage ist gewährleistet, dass die hohe Steifigkeit des Ankerblechpakets im Bereich eines Zahns zur Verbesserung der Stabilität der Ankerwelle ausgenutzt wird.

Gemäß einer weiteren Ausgestaltung der Erfindung wird die Ankerwelle zur Montage in eine Montagevorrichtung eingesetzt, in der sie ausgerichtet wird, und bei dem das Ankerblechpaket ausgerichtet wird und auf die Ankerwelle aufgepresst wird.

Auf diese Weise ist eine einfache Montage in der optimalen Position erzielbar.

Gemäß einer weiteren Ausgestaltung der Erfindung wird zumindest die Ankerwelle oder das Ankerblechpaket in der Montagevorrichtung formschlüssig aufgenommen.

Durch eine formschlüssige Aufnahme von Ankerwelle und/oder Ankerblechpaket in der Montagevorrichtung wird eine einfache Erfassung der Winkellage gewährleistet.

Gemäß einer weiteren Ausgestaltung der Erfindung wird die Ankerwelle mittels Markierungen optisch oder mechanisch ausgerichtet.

Auch auf diese Weise kann eine einfache Erfassung der Winkellage gewährleistet werden.

Gemäß einer weiteren Ausgestaltung der Erfindung wird das Ankerblechpaket durch eine optische Erkennung von Zähnen oder Nuten ausgerichtet.

Gemäß einer weiteren Ausgestaltung der Erfindung wird das Ankerblechpaket mittels Passstiften, die in vorzugsweise in einen Wickelraum des Ankerblechpakets oder in Ausnehmungen des Ankerblechpakets eingreifen, relativ zur Ankerwelle ausgerichtet.

Auch auf diese Weise wird eine einfache Erfassung und Kontrolle der Winkellage des Ankerblechpakets ermöglicht.

Gemäß einer weiteren Ausgestaltung des Verfahrens weisen die Ankerwelle und das Ankerblechpaket jeweils eine mechanische Codierung auf, die miteinander ausgerichtet werden, um eine Montage des Ankerblechpakets an der Ankerwelle in einer vorbestimmten Winkelposition zu gewährleisten.

Eine geeignete Montagevorrichtung zum Montieren einer Ankerwelle an einem Elektrowerkzeug, das einen Oszillationsantrieb mit einem Exzenter aufweist, der an der Ankerwelle des Elektromotors aufgenommen ist, weist Mittel zur Erfassung einer Winkellage der Ankerwelle und zur Erfassung einer Winkellage des Ankerblechpakets auf.

Hierzu kann eine Codierung zur Erfassung der Winkellage der Ankerwelle und/oder des Ankerblechpakets vorgesehen sein.

Alternativ kann auch eine optische Erfassung der Winkellage der Ankerwelle und/oder des Ankerblechpakets vorgesehen sein, wozu bspw. jeweils eine Kamera mit einer entsprechenden Bildverarbeitung verwendet wird.

Die Montagevorrichtung ist ferner vorzugsweise derart ausgebildet, dass die Montage des Ankerblechpakets am Anker in einer vorbestimmten Winkellage zueinander sichergestellt ist, sodass eine Gerade, die eine Mittelachse des Exzenters mit einer Mittelachse der Ankerwelle verbindet, durch einen Zahn des Ankerblechpakets verläuft, vorzugsweise durch die Mittelachse des Zahns.

Weitere Merkmale und Vorteile der Erfindung ergeben sich aus der nachfolgenden Beschreibung bevorzugter Ausführungsbeispiele unter Bezugnahme auf die Zeichnung. Es versteht sich, dass die einzelnen in der Zeichnung dargestellten Teile nur schematisch, insbesondere nicht maßstabsgerecht, dargestellt sind. Es zeigen:
- Fig. 1: eine vereinfachte Seitenansicht eines erfindungsgemäßen Elektrowerkzeuges in Form eines Oszillationsschleifers;
- Fig. 2: eine vereinfachte Ansicht des Elektromotors gemäß Fig. 1 mit einem Exzenter an einem Ende der Ankerwelle und mit einem zugeordneten Exzenterhebel, der die Bewegung des Exzenters in eine oszillierende Bewegung einer Antriebsspindel umsetzt;
- Fig. 3: eine Ansicht auf die Ankerwelle von der Seite des Exzenters, wobei ein Ankerblechpaket auf der Ankerwelle in der optimierten Position aufgenommen ist, in der eine Gerade, die die Mittelachse der Ankerwelle und des Exzenters verbindet, gleichzeitig durch die Mittelachse eines Zahns verläuft;
- Fig. 4: eine Ansicht gemäß Fig. 3, wobei jedoch das Ankerblechpaket gerade in einer ungünstigen Position auf der Ankerwelle montiert ist, sodass eine Gerade, die durch die Mittelachse der Ankerwelle und des Exzenters verläuft, durch eine Nut des Ankerblechpakets verläuft;
- Fig. 5: eine Folge von Messungen der Steifigkeit der Ankerwelle mit montiertem Ankerblechpaket (in arbiträren Einheiten), wobei die oberen, quadratischen Messpunkte eine Ausrichtung mit einem Zahn anzeigen und die unteren, durch Punkte verdeutlichten Messwerte eine Ausrichtung mit einer Nut anzeigen;
- Fig. 6: eine Vorrichtung zur Montage von Ankerwelle und Ankerblechpaket in vereinfachter Darstellung;
- Fig. 7: eine Ansicht auf die Ankerwelle von vorn, mit einer aufgebrachten Markierung zur Erfassung der Winkellage;
- Fig. 8: eine Vorrichtung zur Aufnahme der Ankerwelle in einer vorbestimmten Winkellage, die durch eine Codierung vorgegeben ist und
- Fig. 9: eine Vorrichtung zur Aufnahme des Ankerblechpakets in einer vorbestimmten Winkellage, die durch eine mechanische Codierung vorgegeben ist.

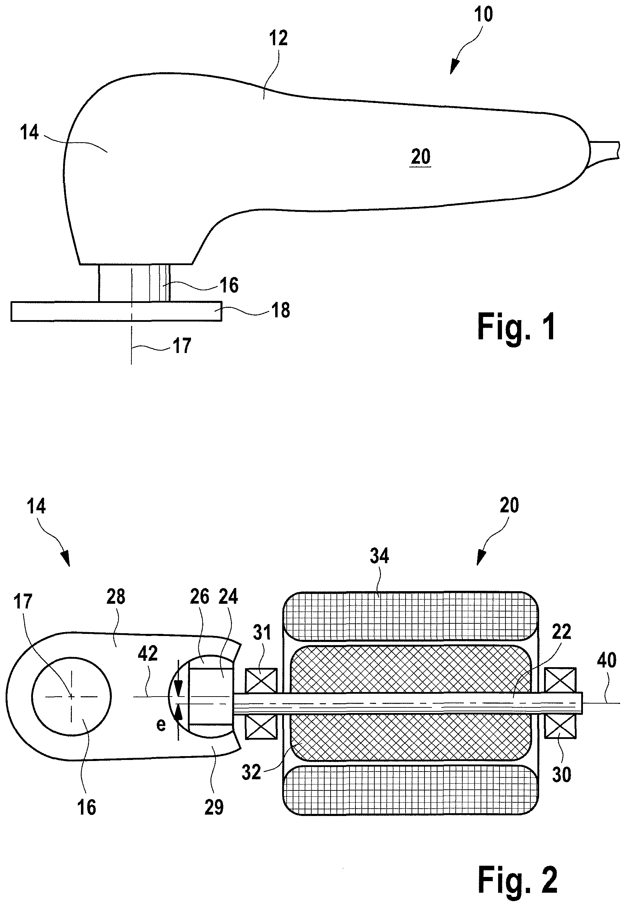

Fig. 1 zeigt ein erfindungsgemäßes Elektrowerkzeug, das insgesamt mit der Ziffer 10 bezeichnet ist. Es handelt sich hier beispielhaft um einen Dreiecksschleifer mit einer um ihre Längsachse 17 drehoszillierend angetriebenen Antriebsspindel 16, an der ein Werkzeug, etwa in Form einer dreiecksförmigen Schleifplatte, aufgenommen ist.

Das Elektrowerkzeug 10 weist ein Gehäuse 12 auf, in dem ein Elektromotor 20 aufgenommen ist und an dessen vorderen Ende ein Oszillationsantrieb 14 vorgesehen ist, der eine Drehbewegung des Elektromotors 20 in eine oszillierende Antriebsbewegung der Antriebsspindel 16 umsetzt.

Es versteht sich, dass die vorliegende Erfindung auch für beliebige andere Elektrowerkzeuge mit oszillierendem Antrieb verwendbar ist, etwa bei Stichsägen, Säbelsägen, Exzenterschleifern und anderen Oszillationswerkzeugen.

Fig. 2 zeigt eine vereinfachte Darstellung des Elektromotors 20 mit dem daran angekoppelten Oszillationsantrieb 14. Der Elektromotor 20 weist eine Ankerwelle 22 auf, an der ein Anker 32 aufgenommen ist und die mittels zweier Lager 30, 31 gelagert ist. Ein zugeordneter Stator 34, innerhalb dessen sich die Ankerwelle 22 mit ihrem Anker 32 bewegt, ist lediglich rein schematisch angedeutet.

An einem Ende der Ankerwelle 22 ist ein Exzenter 24 aufgenommen, dessen Mittelachse 42 gegenüber der Mittelachse 40 der Ankerwelle 22 um einen Betrag e (Exzentrizität) versetzt ist. Auf dem Exzenter 24 ist unter Zwischenlage eines balligen Lagers 26 ein Exzenterhebel 28 gelagert, der das Exzenterlager 26 beidseitig mit einer Exzentergabel 29 umschließt.

Das andere Ende des Exzenterhebels 28 ist fest mit der Antriebsspindel 16 verbunden. Dreht sich die Ankerwelle 22 des Elektromotors 20, so wird somit die Antriebsspindel 16 in eine drehoszillierende Antriebsbewegung um ihre Längsachse 17 versetzt.

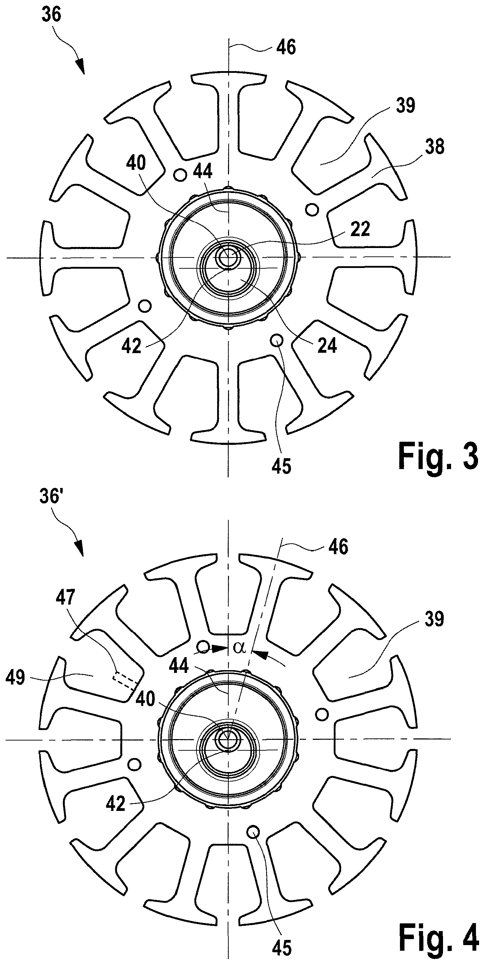

Erfindungsgemäß ist nun die Ankerwelle 22 in einer bestimmten Weise mit dem Anker 32 ausgerichtet, wie im Folgenden anhand der Figuren 3 und 4 näher erläutert wird.

Fig. 3 zeigt eine vergrößerte Ansicht auf die Ankerwelle 28 von der Stirnseite aus gesehen. Der Anker 32 ist hier vergrößert, und zwar ohne Wicklungen dargestellt, sodass das nur das Ankerblechpaket 36 zu sehen ist. Das Ankerblechpaket 36 ist in einer bestimmten Winkellage durch eine Presspassung mit der Ankerwelle 22 verbunden.

Erfindungsgemäß ist die Anordnung so getroffen, dass eine Gerade 44, die die Mittellinien 40, 42 der Ankerwelle 22 und des Exzenters 24 miteinander verbindet, mit der Mittelachse 46 eines Zahns 38 des Ankerblechpakets 36 ausgerichtet ist.

Im vorliegenden Fall weist das Ankerblechpaket 36 insgesamt 12 Zähne 38 auf, die T-förmig ausgebildet sind und die jeweils durch eine Nut 39 voneinander getrennt sind. Jeder Zahn 38 bildet zusammen mit einer daran aufgenommenen Wicklung einen Pol.

Durch die Ausrichtung von Ankerwelle 22 und Exzenter 24 mit der Mittellinie 46 eines Zahns 38 ist gewährleistet, dass die hohe Steifigkeit, die das Ankerblechpaket 36 in der Richtung eines Zahns 38 aufweist, zur Versteifung der Ankerwelle 22 genutzt wird.

Fig. 4 zeigt eine abweichende Montage des Ankerblechpakets 36 - auf der Ankerwelle 22 in der derartigen Lage, dass die Gerade 44, die durch die Mittelachse 40, 42 der Ankerwelle 22 und des Exzenters 24 verläuft, unmittelbar durch eine Nut 39 des Ankerblechpakets 36 - verläuft.

Zwischen der optimalen Lage, die in Fig. 3 dargestellt ist, und der hier dargestellten Lage gemäß Fig. 4 ergibt sich somit ein Winkel von α. Dieser beträgt im vorliegenden Fall 15 Grad, da gemäß Fig. 4 die Gerade 44 unmittelbar durch die Mitte einer Nut 39 verläuft.

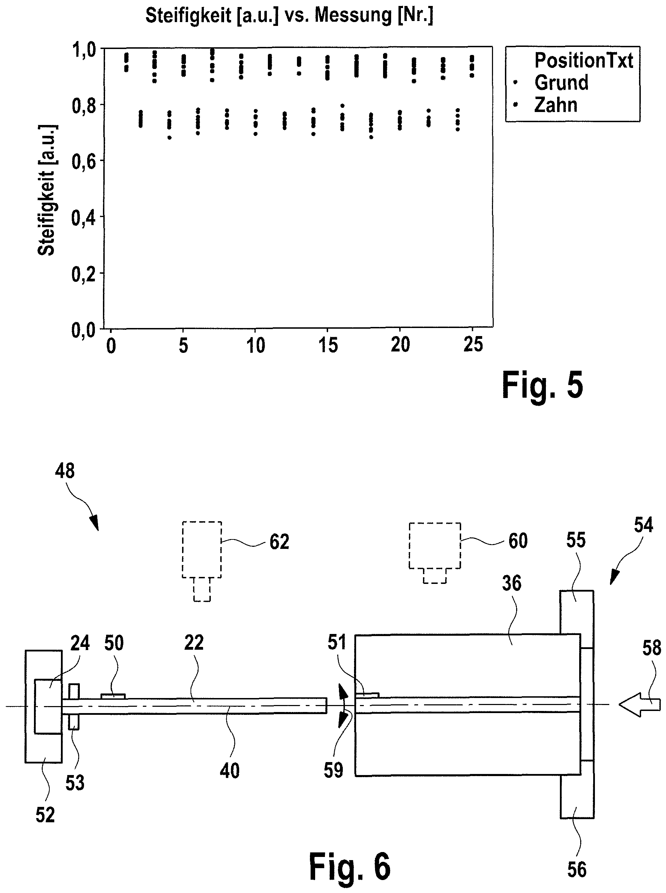

Fig. 5 zeigt dynamische Vergleichsmessungen an der Ankerwelle, die einerseits an Ankerwellen 22 mit daran aufgenommenem Ankerblechpaket 36 in optimaler Position gemäß Fig. 3 durchgeführt wurden, und die andererseits an Ankerwellen 22 mit einem Ankerblechpaket 36 - in der Lage gemäß Fig. 4 durchgeführt wurden.

Dargestellt ist die gemessene Steifigkeit (in arbiträren Einheiten), wobei oben mit den rechteckförmigen Symbolen eine Montage in optimierter Position gemäß Fig. 3 dargestellt ist und mit den kreisförmigen Markierungen eine Messung an Ankerwellen in der Montageposition gemäß Fig. 4 dargestellt ist.

Es zeigt sich, dass die Ankerwellen in der optimierten Position eine deutlich höhere Steifigkeit als in der ungünstigsten Position gemäß Figur 4 aufweisen.

Eine Vorrichtung 48, die zur Montage von Ankerwelle 22 und Ankerblechpaket 36 in der optimierten Position aneinander ausgebildet ist, wird im Folgenden anhand von Fig. 6 erläutert.

Hierzu kann beispielhaft eine Aufnahme 52 für die Ankerwelle vorgesehen sein, in die die Ankerwelle mit ihrem Exzenter 24 eingesetzt wird. Durch eine zusätzliche Führung 53 ist gewährleistet, dass die Ankerwelle 22 in einer vorgegebenen Lage fixiert wird.

An der Ankerwelle 22 ist eine Codierung 50 in Form eines Vorsprungs vorgesehen. Das zugeordnete Ankerblechpaket 36 weist eine entsprechende Codierung 51 in Form einer Ausnehmung auf.

Das Ankerblechpaket 36 wird an seinem gegenüberliegenden Ende mit einer Handlingeinrichtung 54 mittels Greifern 55, 56 gehalten und wird zur Montage auf der Ankerwelle 22 in Richtung des Pfeiles 58 zur Ankerwelle 22 hin bewegt, wobei die Mittelachse des Ankerblechpakets 36 mit der Mittelachse der Ankerwelle 40 ausgerichtet ist.

Das Ankerblechpaket 36 wird auf die Ankerwelle 22 aufgepresst und zum Ende des Aufpressvorgangs, wenn die Codierung 50 die Höhe der Codierung 51 erreicht, solange in Richtung des Pfeils 59 verdreht, bis die Codierung 50 in die Codierung 51 eingreift und das Ankerblechpaket 36 dann durch eine weitere Axialbewegung in die gewünschte Endstellung gebracht werden kann.

Alternativ könnte die Codierung 50 der Ankerwelle 22 auch am dem Ankerblechpaket 36 zugewandten Ende ausgebildet sein. In diesem Fall müsste die entsprechende Codierung 51 am Ankerblechpaket 36 als Längsschlitz ausgebildet sein.

Es versteht sich, dass beliebige andere Maßnahmen möglich sind, um eine bevorzugte Orientierung zwischen Ankerwelle 22 und Ankerblechpaket 36 zu gewährleisten.

Beispielhaft sind in Fig. 6 eine Kamera 60 zur Erfassung der Winkellage des Ankerblechpakets 36 und eine Kamera 62 zur Erfassung der Winkellage der Ankerwelle 22 dargestellt.

Das Ankerblechpaket 36 kann mittels der Kamera 60 optisch erfasst werden, da die Nuten 39 und die Zähne 38 ohne Weiteres optisch erkannt werden können, um so die Winkellage zu bestimmen. Bei der Ankerwelle 22 ist die Verwendung geeigneter Markierungen notwendig, um eine Erfassung der Winkellage zu gewährleisten. Beispielsweise könnte an der Oberfläche der Ankerwelle 22 oder des Exzenters 24 eine Markierung in Form eines Striches vorgesehen sein.

Beliebige andere Markierungen und/oder Codierungen sind denkbar.

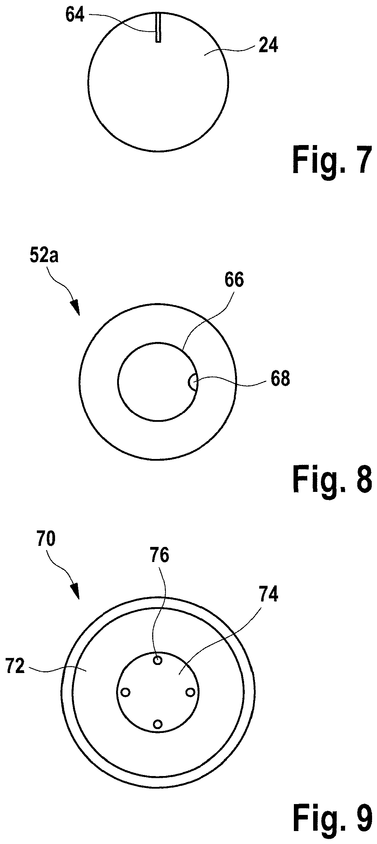

So könnte bspw. auf der Ankerwelle 22 am Exzenter 24 eine Markierung 64 gemäß Fig. 7 vorgesehen sein, die an der Stirnseite ausgebildet ist oder aber an einem Außenumfang des Exzenters 24.

Gleichfalls kann die Montagevorrichtung 48 mit geeigneten Codierungen versehen sein, um eine formschlüssige Aufnahme von Ankerwelle 22 bzw. Ankerblechpaket 36 in einer vorgegebenen Position zu gewährleisten.

Gemäß Fig. 8 könnte z. B. eine Aufnahme 52a eine Ausnehmung 66 aufweisen, in die die Ankerwelle 22 mit ihrem Außenumfang eingeführt werden kann. Durch einen Vorsprung 68 könnte eine formschlüssige Aufnahme in einer vorbestimmten Winkellage gewährleistet werden, wenn hierzu eine entsprechende Ausnehmung an der Ankerwelle 22 vorgesehen ist.

Gemäß Fig. 9 könnte eine entsprechende Aufnahme 70 für das Ankerblechpaket eine Ausnehmung 72 aufweisen, in die das Ankerblechpaket 36 mit dem Außenumfang der Zähne 38 einführbar ist. Eine zentrale Scheibe 74 dient zur Anlage des Ankerblechpakets 36. Dabei können beispielsweise vier erhabene Vorsprünge 76 vorgesehen sein, die in zugeordnete Ausnehmungen 45 gemäß Fig. 3 und 4 am Ankerblechpaket 36 eingreifen können, um so eine Aufnahme des Ankerblechpakets 36 in einer vorgegebenen Winkelposition zu gewährleisten. Des Weiteren sind beispielsweise Stifte 47 denkbar, wie beispielhaft gestrichelt in Fig. 4 angedeutet, die in eine Ausnehmung 49 hineinragen und die eine optische und/oder mechanische Erfassung ermöglichen.

## Patentansprüche

1. Verfahren zum Montieren eines Elektrowerkzeugs (10) mit einem Elektromotor (20), der eine Ankerwelle (22) mit einem Ankerblechpaket (36) aufweist, das eine Mehrzahl von Zähnen (38) aufweist, die jeweils durch Nuten (39) voneinander getrennt sind, wobei an der Ankerwelle ein Exzenter (24) zum Antrieb eines Oszillationsantriebs (14) aufgenommen ist, mit den Schritten:
- winkelmäßiges Ausrichten der Ankerwelle (22) in Bezug auf das Ankerblechpaket (36) derart, dass eine Gerade (44), die eine Mittelachse (42) des Exzenters (24) mit einer Mittelachse (40) der Ankerwelle (22) verbindet, durch eine Mittelachse (46) eines Zahns (38) des Ankerblechpakets (36) verläuft; und
- Verbinden der Ankerwelle (22) mit dem Ankerblechpaket (36) in der ausgerichteten Position.

2. Verfahren nach Anspruch 1, bei dem die Ankerwelle (22) zur Montage in eine Montagevorrichtung (48) eingesetzt wird, in der sie ausgerichtet wird, und bei dem das Ankerblechpaket (36) ausgerichtet wird und auf die Ankerwelle (22) aufgepresst wird.

3. Verfahren nach Anspruch 2, bei dem zumindest die Ankerwelle (22) oder das Ankerblechpaket (36) in der Montagevorrichtung (48) formschlüssig aufgenommen wird.

4. Verfahren nach Anspruch 2, bei dem die Ankerwelle (22) mittels Markierungen (50, 64) optisch oder mechanisch ausgerichtet wird.

5. Verfahren nach einem der vorhergehenden Ansprüche, bei dem das Ankerblechpaket (36) durch eine optische Erkennung von Zähnen (38) oder Nuten (39) ausgerichtet wird.

6. Verfahren nach einem der Ansprüche 1 bis 4, bei dem das Ankerblechpaket (36) mittels Stiften (47), die vorzugsweise in einen Wickelraum (49) des Ankerblechpakets (36) oder in Ausnehmungen (45) des Ankerblechpakets (36) eingreifen, relativ zur Ankerwelle (22) ausgerichtet wird.

7. Verfahren nach einem der vorhergehenden Ansprüche, bei dem die Ankerwelle (22) und das Ankerblechpaket (36) jeweils eine mechanische Codierung (50, 51) aufweisen, um eine Montage des Ankerblechpakets (36) an der Ankerwelle (22) in einer vorbestimmten Winkelposition zu gewährleisten.

8. Elektrowerkzeug mit einem Elektromotor (20) mit einer Ankerwelle (22), an der ein Exzenter (24) zum Antrieb eines Oszillationsantriebs (14) aufgenommen ist, und mit einem an der Ankerwelle (22) aufgenommenen Ankerblechpaket (36), das eine Mehrzahl von Zähnen (38) aufweist, die jeweils durch Nuten (39) voneinander getrennt sind, **dadurch gekennzeichnet, dass** der Exzenter (24) mit der Ankerwelle (22) derart winkelmäßig ausgerichtet ist, dass eine Gerade (44), die eine Mittelachse (42) des Exzenters (24) mit einer Mittelachse (40) der Ankerwelle (22) verbindet, durch eine Mittelachse (46) eines Zahns (38) des Ankerblechpakets (36) verläuft.

9. Elektrowerkzeug nach Anspruch 8, bei dem an der Ankerwelle (22) und am Ankerblechpaket (36) mechanische Codierungen (50, 51) vorgesehen sind, durch die die Ausrichtung der Ankerwelle (22) zum Ankerblechpaket (36) festgelegt ist.

## Claims

1. Method for assembling an electric tool (10) having an electric motor (20) which has an armature shaft (22) with an armature core (36) which has a plurality of teeth (38) which are each separated from one another by grooves (39), wherein an eccentric (24) for driving an oscillating drive (14) is received on the armature shaft, having the following steps:
- angular alignment of the armature shaft (22) with respect to the armature core (36) such that a straight line (44) connecting a central axis (42) of the eccentric (24) to a central axis (40) of the armature shaft (22) runs through a central axis (46) of a tooth (38) of the armature core (36); and
- connecting the armature shaft (22) to the armature core (36) in the aligned position.

2. Method according to claim 1, in which the armature shaft (22) is inserted for assembling into an assembly device (48) in which it is aligned, and in which method the armature core (36) is aligned and pressed onto the armature shaft (22).

3. Method according to claim 2, in which at least the armature shaft (22) or the armature core (36) is received in the assembly device (48) in a form-fitting manner.

4. Method according to claim 2, in which the armature shaft (22) is aligned optically or mechanically by means of markings (50, 64).

5. Method according to any of the preceding claims, in which the armature core (36) is aligned by optical recognition of teeth (38) or grooves (39).

6. Method according to any of claims 1 to 4, in which the armature core (36) is aligned relative to the armature shaft (22) by means of pins (47), which preferably engage into a winding space (49) of the armature core (36) or into recesses (45) of the armature core (36).

7. Method according to any of the preceding claims, in which the armature shaft (22) and the armature core (36) each have a mechanical coding (50, 51) to ensure that the armature core (36) is assembled on the armature shaft (22) in a predetermined angular position.

8. Electric tool having an electric motor (20) having an armature shaft (22) on which an eccentric (24) for driving an oscillating drive (14) is received, and having an armature core (36) which is received on the armature shaft (22) and has a plurality of teeth (38) which are each separated from one another by grooves (39), **characterised in that** the eccentric (24) is aligned with the armature shaft (22) such that a straight line (44) connecting a central axis (42) of the eccentric (24) to a central axis (40) of the armature shaft (22) runs through a central axis (46) of a tooth (38) of the armature core (36).

9. Electric tool according to claim 8, in which, on the armature shaft (22) and on the armature core (36), mechanical codings (50, 51) are provided by which the alignment of the armature shaft (22) in relation to the armature core (36) is defined.

## Revendications

1. Procédé d'assemblage d'un outil électrique (10) muni d'un moteur électrique (20) présentant un arbre d'induit (22) muni d'un paquet de tôles d'induit (36) présentant une pluralité de dents (38) séparées respectivement les unes des autres grâce à des rainures (39), dans lequel un excentrique (24) permettant d'entrainer un entraînement oscillant (14) est accueilli au niveau de l'arbre d'induit, comprenant les étapes ci-dessous consistant à:
- orienter angulairement l'arbre d'induit (22) par rapport au paquet de tôles d'induit (36) de telle manière qu'une droite (44) reliant un axe médian (42) de l'excentrique (24) à un axe médian (40) de l'arbre d'induit (22) s'étend en passant par un axe médian (46) d'une dent (38) du paquet de tôles d'induit (36) ; et
- relier l'arbre d'induit (22) au paquet de tôles d'induit (36) en position orientée.

2. Procédé selon la revendication 1, dans lequel l'arbre d'induit (22) est utilisé pour un assemblage dans un dispositif d'assemblage (48) au sein duquel il est orienté, et dans lequel le paquet de tôles d'induit (36) est orienté et emmanché sur l'arbre d'induit (22).

3. Procédé selon la revendication 2, dans lequel au moins l'arbre d'induit (22) ou le paquet de tôles d'induit (36) est accueilli par complémentarité de forme dans le dispositif d'assemblage (48).

4. Procédé selon la revendication 2, dans lequel l'arbre d'induit (22) est orienté de manière optique ou mécanique au moyen de repères (50, 64).

5. Procédé selon l'une quelconque des revendications précédentes, dans lequel le paquet de tôles d'induit (36) est orienté grâce à une détection optique de dents (38) ou de rainures (39).

6. Procédé selon l'une quelconque des revendications 1 à 4, dans lequel le paquet de tôles d'induit (36) est orienté par rapport à l'arbre d'induit (22) au moyen de broches (47) qui viennent en prise de manière préférée dans un espace d'enroulement (49) du paquet de tôles d'induit (36) ou dans des évidements (45) du paquet de tôles d'induit (36).

7. Procédé selon l'une quelconque des revendications précédentes, dans lequel l'arbre d'induit (22) et le paquet de tôles d'induit (36) présentent respectivement un codage mécanique (50, 51) afin de garantir un assemblage du paquet de tôles d'induit (36) au niveau de l'arbre d'induit (22) dans une position angulaire prédéterminée.

8. Outil électrique avec un moteur électrique (20) muni d'un arbre d'induit (22) au niveau duquel est accueilli un excentrique (24) permettant l'entrainement d'un entraînement oscillant (14), et muni d'un paquet de tôles d'induit (36) accueilli au niveau de l'arbre d'induit (22) et présentant une pluralité de dents (38) séparées respectivement les unes des autres grâce à des rainures (39), **caractérisé en ce que** l'excentrique (24), avec l'arbre d'induit (22), est orienté angulairement de telle manière qu'une droite (44) reliant un axe médian (42) de l'excentrique (24) à un axe médian (40) de l'arbre d'induit (22) s'étend en passant par un axe médian (46) d'une dent (38) du paquet de tôles d'induit (36).

9. Outil électrique selon la revendication 8, dans lequel des codages mécaniques (50, 51) au moyen desquels est définie l'orientation de l'arbre d'induit (22) par rapport au paquet de tôles d'induit (36) sont prévus au niveau de l'arbre d'induit (22) et au niveau du paquet de tôles d'induit (36).
